# EUROPÄISCHE PATENTSCHRIFT

(11) **EP 4 098 123 B1**
(45) Veröffentlichungstag und Bekanntmachung des Hinweises auf die Patenterteilung: **19.02.2025**
(21) Anmeldenummer: 21177415.3
(22) Anmeldetag: 02.06.2021
(51) Int. Cl.: A21C 1/14, B66F 9/02, B66F 9/12, B66F 9/19, B66F 9/18

(54) **HEBEKIPPER MIT ZANGENVERRIEGELUNG ZUM FIXIEREN EINES BOTTICHWAGENS**
TILTING LIFTER WITH A CLAMPING LOCK FOR FIXING A TUB CARRIAGE
CHARIOT ÉLÉVATEUR POURVU DE VERROUILLAGE À PINCE PERMETTANT DE FIXER UN CHARIOT À CUVE

(43) Veröffentlichungstag der Anmeldung: 07.12.2022
(73) Patentinhaber: DIOSNA Dierks & Söhne GmbH, 49086 Osnabrück (DE)
(72) Erfinder: GHANI, Hashem, 49086 Osnabrück (DE)
(74) Vertreter: Ege Lee & Roider Patentanwälte

(56) Entgegenhaltungen:
- EP-A1- 3 791 725
- DE-A1- 10 013 595
- DE-U1- 29 723 882
- DE-U1- 9 403 106
- US-A- 3 306 479

## Beschreibung

Die vorliegende Erfindung betrifft einen Hebekipper einer Nahrungsmittelteigverarbeitungsanlage mit den Merkmalen des Oberbegriffs des Anspruchs 1 und ein Verfahren zum Fixieren eines Bottichwagens an einem Hebekipper einer Nahrungsmittelteigverarbeitungsanlage.

Bottichwagen bzw. fahrbare Bottiche sind Bestandteile von Misch- und Knetmaschinen in Industriebäckereien. Ein Bottichwagen kann unterschiedliche Größe für Nahrungsmittelmassen von 120 bis 1000 kg haben, in den jeweils ein motorisch antreibbares Misch- und Knetwerkzeug zur Durchführung des Misch- und Knetvorganges hineinragt. Nach Beendigung des Knetvorganges wird das Werkzeug ausgefahren und der Bottichwagen zu einer Verarbeitungsanlage gefahren. Mit Hilfe eines Hebekippers wird der Bottichwagen von einer Hebebühne des Hebekippers erfasst, auf die der Größe des Hebekippers entsprechenden Höhe gebracht und um mehr als 90° gekippt, so dass das die im Bottichwagen befindliche Nahrungsmittelmasse in die darunter angeordnete Eingangsstation einer Bearbeitungsvorrichtung fällt, welche beispielsweise als ein Trichter ausgebildet sein kann. Ein solcher Hebekipper geht beispielsweise aus der DE 19 40 501 U1 und der DE 42 09 689 C2 hervor.

Zur Fixierung des Bottichwagens an dem Hebekipper sind hydraulisch betriebene Zangenverriegelungen bekannt. Nachteile solcher hydraulischen Antriebe sind allgemein, dass in den Leitungen Leckagen auftreten können und dass die Antriebe als anfällig für mögliche Verschmutzung gelten. Die Viskosität des Hydrauliköles ist außerdem stark abhängig von der Außentemperatur und durch die Kompressibilität des Öls treten Druckverluste auf. Alle diese Faktoren führen dazu, dass hydraulische Antriebe wartungsaufwendig sind.

Eine gattungsgemässe Entleerungshilfe, die zum Entleeren eines Bottichs vorgesehen ist, ist aus der deutschen Gebrauchsmusterschrift 94 03 106 bekannt. Aus der europäischen Patentanmeldung EP 3 791 725 A1 ist eine Knetmaschine mit Zangenverriegelung zum Fixieren eines Bottichwagens bekannt. Die US Schrift 3,306,479 zeigt einen Gabelstapler mit einer Haltevorrichtung. Aus der Offenlegungsschrift DE 100 13 595 A1 ist eine elektromotorisch betriebene Vorrichtung zum Heben und Kippen eines fahrbaren Bottichs einer Teigknetmaschine bekannt.

Es ist daher Aufgabe der vorliegenden Erfindung einen Hebekipper mit einer Vorrichtung zum Fixieren eines Bottichwagens anzugeben, die besonders einfach und kostengünstig ist.

Diese Aufgabe wird von einem Hebekipper einer Nahrungsmittelteigverarbeitungsanlage mit den Merkmalen des Anspruchs 1 und von einem Verfahren zum Fixieren eines Bottichwagens an einem Hebekipper einer Nahrungsmittelteigverarbeitungsanlage gelöst.

Demnach ist ein Hebekipper einer Nahrungsmittelteigverarbeitungsanlage mit einem Hubwagen, der entlang einer Verfahrrichtung verfahrbar ist, vorgesehen, wobei auf dem Hubwagen eine Hebebühne angeordnet ist, die an dem Hubwagen schwenkbar gelagert ist, und wobei an der Hebebühne eine Zangenverriegelungseinrichtung zur Fixierung eines Bottichwagens gelagert ist. Die Zangenverriegelungseinrichtung weist eine Zange mit zwei Armen auf, die in einer geschlossenen Stellung dazu ausgebildet ist, den Bottichwagen in einer vordefinierten Position zu fixieren und in einer geöffneten Stellung den Bottichwagen zur Entnahme freizugeben. Zudem weist die Zangenverriegelungseinrichtung ein verstellbares Hebelsystem auf, mittels dessen die Zangenverriegelungseinrichtung zwischen der geschlossen und der geöffneten Stellung verstellbar ist, wobei das Hebelsystem in die geschlossene Stellung vorgespannt ist und durch Abstützung an einem ortsfesten Bauteil des Hebekippers oder einem Boden entgegen der Vorspannung in eine geöffnete Stellung bringbar ist.

Da es sich um eine rein passive Zangenverriegelungseinrichtung handelt, die lediglich die Bewegung des Hubwagens bzw. der Hebebühne ausnutzt, ist diese besonders einfach zu warten und kostengünstig.

Vorzugsweise weist der Bottichwagen einen drehbaren Bottich auf, der zur Aufnahme von Nahrungsmittelteig mit Teigmassen von 100 bis 3000 kg, insbesondere bis 1000 kg ausgebildet ist.

In einer vorteilhaften Ausführungsform ist das Hebelsystem achssymmetrisch ausgebildet und umfasst ein mittleres Drehgelenk, das auf der Symmetrieachse liegt, wobei das Hebelsystem derart ausgebildet ist, dass eine durch die Abstützung hervorgerufene vertikale Bewegung des mittleren Drehgelenks (relativ zur Hebebühne) die Zangenverriegelungseinrichtung in eine geöffnete Stellung überführt. Vorzugsweise ist das Drehgelenk ein Gabelgelenk. In dem Drehgelenk sind bevorzugt beide Arme der Zange mittelbar gelagert.

Es ist vorteilhaft, wenn an dem mittleren Drehgelenk eine Abstützstange befestigt ist, die in einer untersten Position des Hubwagens dazu ausgebildet ist, auf dem Boden aufzustehen und das mittlere Drehgelenk vertikal nach oben in eine oberste Position (relativ zum Hubwagen) zu bewegen. Die Abstützstange weist bevorzugt eine Länge zwischen 10 cm und 20 cm auf.

Die Vorspannung ist bevorzugt mittels wenigstens eines Federelementes gebildet ist, das an einer Seite an dem Hebelsystem und an einer anderen Seite an der Hebebühne befestigt ist. Dabei kann es sich um zwei Gasdruckfedern handeln, die jeweils auf einer Seite des mittleren Drehgelenks am Hebelsystem angeordnet sind.

Das wenigstens eine Federelement weist vorzugweise eine Gesamtfederkraft zwischen 5000 N und 7000 N auf.

Das Hebelsystem kann zwei Verbindungsstangen aufweisen, die mit ihren ersten Enden auf gegenüberliegenden Seiten des mittleren Drehgelenks drehbar gelagert sind und an ihren zweiten Enden jeweils an einem Ende eines Arms drehbar gelagert sind, wobei die Schwenkachsen der drei Drehgelenke parallel zum Boden orientiert sind. Die Arme der Zange sind dabei bevorzugt derart drehbar gelagert, dass eine Bewegung des mittleren Drehgelenks in vertikaler Richtung ein Schließen und Öffnen der Zange bewirkt.

Weiterhin ist eine Hebekipperanordnung mit einem zuvor beschriebenen Hebekipper und einem Bottichwagen vorgesehen, wobei der Bottichwagen einen Bottich, der mit einer Welle verbunden ist und ein Untergestell aufweist. Die Welle ist von einer Nabenscheibe konzentrisch umgeben, die mit dem Untergestell verbunden ist und somit relativ zum Bottichwagen ortsfest gehalten ist. Die Nabenscheibe ist von der Zange der Zangenverriegelungseinrichtung beim Schließvorgang greifbar.

Außerdem ist ein Verfahren zum Fixieren eines Bottichwagens an einem Hebekipper einer Nahrungsmittelteigverarbeitungsanlage vorgesehen, wobei der Hebekipper einen Hubwagen aufweist, der entlang einer Verfahrrichtung verfahrbar ist, wobei auf dem Hubwagen eine Hebebühne angeordnet ist, die an dem Hubwagen schwenkbar gelagert ist, und wobei an der Hebebühne eine Zangenverriegelungseinrichtung mit einem verstellbaren Hebelsystem zur Fixierung des Bottichwagens gelagert ist, mittels dessen die Zangenverriegelungseinrichtung zwischen der geschlossen und der geöffneten Stellung verstellbar ist, wobei das Hebelsystem in die geschlossene Stellung vorgespannt ist, und das Verfahren die folgenden Verfahrensschritte umfasst:
a) Verfahren des Hubwagens in eine unterste Position,
b) Einbringen des Bottichwagens in die Zangenverriegelungseinrichtung, die sich in der geöffneten Stellung befindet,
c) Verfahren des Hubwagens entlang der Verfahrrichtung, wodurch das Hebelsystem relativ zum Hubwagen bewegt wird und in die geschlossene Stellung übergeht und den Bottichwagen an der Hebebühne fixiert,
d) Verfahren des Hubwagens bis in eine oberste Position und Verkippen des Bottichwagens mittels der Hebebühne,
e) Zurückkippen des Bottichwagens und Verfahren des Hubwagens in Verfahrrichtung nach unten,
f) Bevor der Hubwagen die unterste Position erreicht, Abstützen des Hebelsystems an einem ortsfesten Bauteil des Hebekippers oder dem Boden, so dass sich das Hebelsystem entgegen der Vorspannung relativ zum Hubwagen verstellt, wobei das Verstellen ein Öffnen der Zangenverriegelungseinrichtung bewirkt, und der Bottichwagen in der untersten Position des Hubwagens aus der Zangenverriegelungseinrichtung frei entnehmbar ist.

Vorzugsweise wird die Vorspannung mittels wenigstens einer Druckfeder gebildet, die sich an dem Hebelsystem und der Hebebühne abstützt und das Hebelsystem in einer unteren Stellung vorspannt, wobei in Schritt f) das Hebelsystem durch die Abstützung von der unteren Stellung in eine obere Stellung angehoben wird.

Die Vorrichtung ist bevorzugt, wie zuvor beschrieben ausgebildet.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Figur 1:: eine räumliche Ansicht eines Hebekippers mit Bottichwagen und Zangenverriegelung,
- Figur 2:: eine räumliche Darstellung des Bottichwagens mit Zangenverriegelung in einer geöffneten Stellung,
- Figur 3:: eine Ansicht von unten auf die Zangenverriegelung in der geöffneten geschlossenen Stellung der Figur 2,
- Figur 4:: eine räumliche Darstellung des Bottichwagens mit Zangenverriegelung in einer geschlossenen Stellung, sowie
- Figur 5:: eine Ansicht von unten auf die Zangenverriegelung in der geschlossenen Stellung der Figur 4.

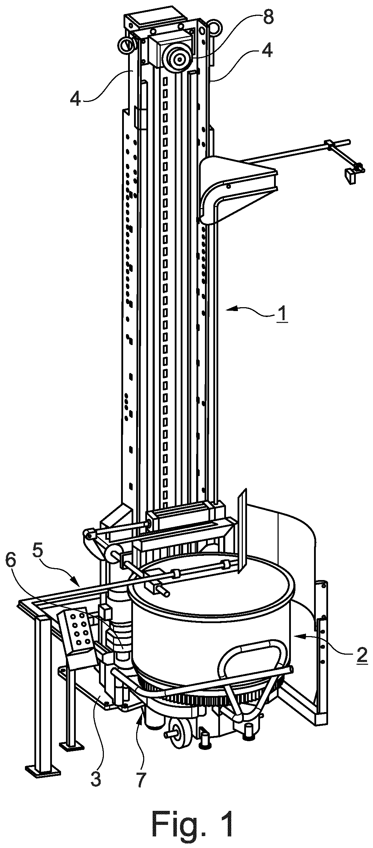

In der Figur 1 ist ein Hebekipper 1 einer Nahrungsmittelteigverarbeitungsanlage dargestellt. Dem Hebekipper 1 ist im Produktionsfluss eine nicht dargestellte Teigmisch-und Knetmaschine vorgeschaltet. Diese Teigmisch-und Knetmaschine umfasst einen Bottichwagen 2, in dem der Teig durch ein motorisch angetriebenes Misch- und Knetwerkzeug geformt wird. Nach Beendigung des Knetvorganges wird der Bottichwagen 2 zu dem Hebekipper 1 gefahren. Der Grundkörper des Hebekippers 2 weist eine Bodenplatte 3 und zwei parallele Säulen 4 auf, an deren Innenseiten sich Führungsbahnen oder Führungsschienen für einen Hubwagen 5 befinden. Der Hubwagen 5 läuft über Rollen in Führungsbahnen der Schienen entlang einer Verfahrrichtung. Zur Lastaufnahme ist auf dem Hubwagen 5 eine Hebebühne 6 angeordnet, die an dem Hubwagen 5 mittels eines nicht dargestellten Drehlagers schwenkbar gelagert ist. An der Hebebühne ist der Bottichwagen 2 mittels einer Zangenverriegelungseinrichtung 7 gehalten, der somit über das Drehlager verkippbar ist. Die Kippachse ist senkrecht zur Verfahrrichtung des Hubwagens angeordnet. Die Verkippung kann bis zu 120°, insbesondere 135° betragen.

Im oberen Teil des Hebekippers 1 ist zwischen den beiden Säulen 4 eine Drehachse 8 angeordnet, auf der zwei nicht dargestellte Kettenumlenkräder angeordnet sind, auf denen Rollenketten laufen. Im unteren oder oberen Teil des Hebekippers 1 ist ein nicht dargestellter Antriebsmotor angeordnet, der die zwei parallellaufenden Rollenketten, an der der Hubwagen 5 befestigt ist, antreibt.

Figur 1 zeigt den Hebekipper 1 in der untersten Stellung, in der der Bottichwagen 2 auf dem Boden aufsteht. Die Zangenverriegelungseinrichtung 7 befindet sich in der geöffneten Stellung.

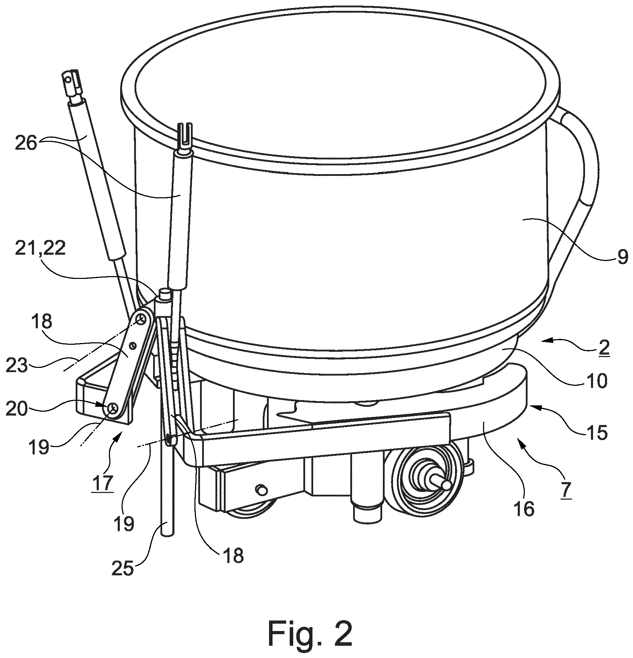

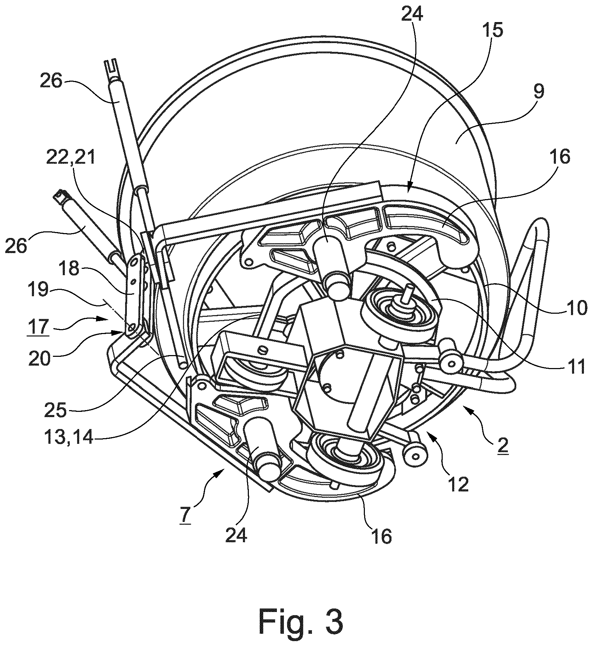

Die Figuren 2 und 3 zeigen im Detail die Zangenverriegelungseinrichtung 7 in der geöffneten Stellung.

Der Bottichwagen 2 weist einen Bottich 9 auf, der mit einer nicht dargestellten Welle verbunden ist. Auf der Welle sitzt unterhalb des Bottichs 9 eine Bottichscheibe 10, die mit der Welle drehfest verbunden ist und die mit einem Reibrad einer Knetmaschine zum Drehen des Bottichs in Wirkverbindung bringbar ist. Unterhalb der Bottichscheibe 10 ist die Welle von einer Nabenscheibe 11 konzentrisch umgeben, die mit einem Untergestell 12 des Bottichwagens 2 verbunden ist und somit ortsfest gehalten ist. Bei Rotation des Bottichs 9 dreht sich die Nabenscheibe 11 nicht mit. Die Nabenscheibe 11 weist einen unrunden Bereich 13 auf, der eine plane Wirkfläche 14 ausbildet. Passend zu dieser Wirkfläche 14 weist eine Zange 15 der Zangenverriegelungseinrichtung 7 eine Gegenwirkfläche auf. Beim nicht dargestellten Schließvorgang der Zangenverriegelungseinrichtung 7 werden die beiden Wirkflächen in Anlage gebracht. Die Wirkflächen sind bevorzugt derart ausgestaltet, dass der Bottichwagen 2 beim Schließen der Zangenverriegelungseinrichtung 7 vom Boden abgehoben wird. Da die Zange 15 zwei Arme 16 aufweist, ist weiterhin ein zweiter nicht dargestellter unrunder Bereich an der Nabenscheibe 11 ausgebildet, der ebenfalls eine Wirkfläche darstellt, die mit einer weiteren Gegenwirkfläche der Zange 15 in Anlage bringbar ist.

Bei der Zangenverriegelungseinrichtung 7 handelt es sich um ein passives System ohne jeglichen Antrieb. Die Zange 15 trägt die beiden Arme 16, die an einem gemeinsamen Hebelsystem 17 gehalten sind. Die Zangenarme 16 sind jeweils an einem Ende an einer ersten Verbindungsstange 18 um eine erste Schwenkachse 19 gehalten. Die ersten Schwenkachsen 19 werden jeweils mittels eines ersten Gabelgelenks 20 ausgebildet und verlaufen parallel zum Boden bzw. zur Unterseite des Bottichs 9. Die beiden Verbindungsstangen 18 sind an dem anderen Ende in einem gemeinsamen zweiten Gelenk 21 verschwenkbar gehalten. Das zweite Gelenk 21 ist ebenfalls ein Gabelgelenk, wobei der Gelenkkopf 22 zwei sich gegenüberliegende zweite Schwenkachsen 23 definiert, die ebenfalls parallel zum Boden und zu den ersten Schwenkachsen 19 verlaufen. Die Zangenverriegelungseinrichtung 7 ist zur Mitte des zweiten Gebelgelenks 21 symmetrisch ausgebildet. Die beiden Verbindungsstangen 18 sind gleich lang. Zum Führen der Bewegung der beiden Zangenarme 16 sind diese an einer Haltevorrichtung 24, die bevorzugt Teil der Hebebühne des Hebekippers ist, drehbar gehalten. Die dadurch ausgebildeten beabstandeten Drehachsen sind senkrecht zu den Drehachsen der Gabelgelenke 19,23 orientiert. Der Abstand zwischen den Drehachsen beträgt bevorzugt zwischen 500 mm und 700 mm, insbesondere zwischen 550 mm und 620 mm, besonders bevorzugt 590 mm.

Eine Bewegung des Gelenkkopfs des zweiten Gabelgelenks 22 relativ zu den Zangenarmen 16 und parallel zu den Drehachsen der Zangenarme 16 bewirkt ein Öffnen und Schließen der Zangenverriegelungseinrichtung 7.

In der dargestellten geöffneten Stellung der Zangenverriegelungseinrichtung 7, ist der Bottichwagen 2 aus der Zange 15 entnehmbar. Das zweite Gabelgelenk 21 bzw. der Gelenkkopf 22 befindet sich in einer obersten Position. Die Zangenarme 16 geben die Nabenscheibe 11 frei.

Die Zangenverriegelungseinrichtung 7 ist in die geschlossene Stellung vorgespannt. In der in den Figuren dargestellten Ausführungsform ist an dem Genlenkkopf des zweiten Gabelgelenks 22 eine Abstützstange 25 befestigt, die bevorzugt eine Länge zwischen 10 und 20 cm aufweist. In der dargestellten offenen Stellung, stützt sich die Abstützstange 25 mit ihrem freien Ende am Boden ab und drückt dadurch den Gelenkkopf 22 nach oben gegen die Vorspannung. Die Vorspannung wird mittels zweier Gasdruckfedern 26 generiert, die jeweils an einer der Verbindungsstangen 18 angelenkt sind und an der gegenüberliegenden Seite an der Hebebühne gelagert sind. Die Federkraft der beiden Gasdruckfedern 26 beträgt zusammen zwischen 5000 N und 7000 N, bevorzugt etwa 6000 N. Es ist auch denkbar, die Vorspannkraft durch Zugfedern aufzubringen, die sich unterhalb des Gelenkkopfs 22, unten an der Hebebühne abstützen.

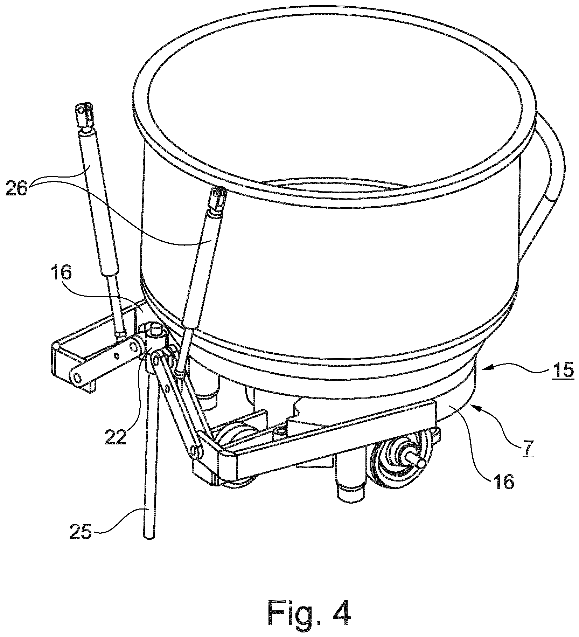

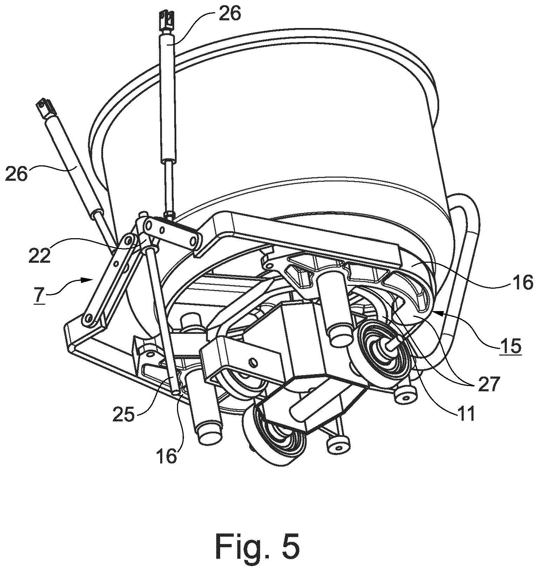

In den Figuren 4 und 5 ist die geschlossene Stellung der Zangenverriegelungseinrichtung 7 dargestellt. Verfährt die nicht dargestellte Hebebühne, an der die Gasdruckfedern 26 gehalten sind, nach oben, wird die Abstützstange 25 vom Boden abgehoben und der Gelenkkopf des zweiten Gabelgelenks 22 bewegt sich relativ zu den Zangenarmen 16 nach unten, in die unterste Stellung. Dadurch werden die Zangenarme 16 um die jeweilige Drehachse verschwenkt und aufeinander zubewegt, so dass sich die Zange 15 schließt. Die Zangenarme 16 weisen Vorsprünge 27 auf, die in passende Ausnehmungen der Nabenscheibe 11 des Bottichwagens eingreifen und somit eine Verriegelung bewirken.

Die Zange wird erfindungsgemäß ohne separaten Antrieb nur durch Vorspannung, insbesondere durch Federkraft und Bewegung der Hebebühne Verriegelt und Entriegelt, was die Vorrichtung zum Fixieren des Bottichwagens besonders einfach und kostengünstig macht.

## Patentansprüche

1. Hebekipper (1) einer Nahrungsmittelteigverarbeitungsanlage mit einem Hubwagen (5), der entlang einer Verfahrrichtung verfahrbar ist, wobei auf dem Hubwagen (5) eine Hebebühne (6) angeordnet ist, die an dem Hubwagen (5) schwenkbar gelagert ist, **dadurch gekennzeichnet, dass** an der Hebebühne (6) eine Zangenverriegelungseinrichtung (7) zur Fixierung eines Bottichwagens (2) gelagert ist, wobei die Zangenverriegelungseinrichtung (7) eine Zange (15) mit zwei Armen (16) aufweist, die in einer geschlossenen Stellung dazu ausgebildet ist, den Bottichwagen (2) in einer vordefinierten Position zu fixieren und in einer geöffneten Stellung den Bottichwagen (2) zur Entnahme freizugeben, wobei die Zangenverriegelungseinrichtung (7) ein verstellbares Hebelsystem (17) aufweist, mittels dessen die Zangenverriegelungseinrichtung (7) zwischen der geschlossen und der geöffneten Stellung verstellbar ist, wobei das Hebelsystem (17) in die geschlossene Stellung vorgespannt ist und durch Abstützung an einem ortsfesten Bauteil des Hebekippers oder einem Boden entgegen der Vorspannung in eine geöffnete Stellung bringbar ist.

2. Hebekipper nach Anspruch 1, **dadurch gekennzeichnet, dass** das Hebelsystem (17) achssymmetrisch ist und ein mittleres Drehgelenk (21) umfasst, das auf der Symmetrieachse liegt, wobei das Hebelsystem (17) derart ausgebildet ist, dass eine durch die Abstützung hervorgerufene vertikale Bewegung des mittleren Drehgelenks (21) die Zangenverriegelungseinrichtung in eine geöffnete Stellung überführt.

3. Hebekipper nach Anspruch 2, **dadurch gekennzeichnet, dass** an dem mittleren Drehgelenk (21) eine Abstützstange (25) befestigt ist, die in einer untersten Position des Hubwagens (5) dazu ausgebildet ist, auf dem Boden aufzustehen und das mittlere Drehgelenk (21) vertikal nach oben in eine oberste Position zu bewegen.

4. Hebekipper nach Anspruch 3, **dadurch gekennzeichnet, dass** die Abstützstange (25) eine Länge zwischen 10 cm und 20 cm aufweist.

5. Hebekipper nach einem der vorhergehenden Ansprüche, **dadurch gekennzeichnet, dass** die Vorspannung mittels wenigstens eines Federelementes (26) gebildet ist, das an einer Seite an dem Hebelsystem (17) und an einer anderen Seite an der Hebebühne (6) befestigt ist.

6. Hebekipper nach Anspruch 5, **dadurch gekennzeichnet, dass** das wenigstens eine Federelement (26) zwei Gasdruckfedern sind, die jeweils auf einer Seite des mittleren Drehgelenks (21) am Hebelsystem (17) angeordnet sind.

7. Hebekipper nach Anspruch 5 oder 6, **dadurch gekennzeichnet, dass** das wenigstens eine Federelement (26) eine Gesamtfederkraft zwischen 5000 N und 7000 N aufweist.

8. Hebekipper nach einem der vorhergehenden Ansprüche 2 bis 7, **dadurch gekennzeichnet, dass** das Hebelsystem (17) zwei Verbindungsstangen (18) aufweist, die mit ihren ersten Enden auf gegenüberliegenden Seiten des mittleren Drehgelenks (21) drehbar gelagert sind und an ihren zweiten Enden jeweils an einem Ende eines Arms (16) drehbar gelagert sind, wobei die Schwenkachsen der drei Drehgelenke (19,23) parallel zum Boden orientiert sind.

9. Hebekipperanordnung mit einem Hebekipper (1) nach einem der vorhergehenden Ansprüche und einem Bottichwagen (2) aufweisend einen Bottich (9), der mit einer Welle verbunden ist sowie ein Untergestell, wobei die Welle von einer Nabenscheibe (11) konzentrisch umgeben ist, die mit dem Untergestell verbunden ist und somit relativ zum Bottichwagen (2) ortsfest gehalten ist, und wobei die Nabenscheibe (11) von der Zange der Zangenverriegelungseinrichtung (15) beim Schließvorgang greifbar ist.

10. Verfahren zum Fixieren eines Bottichwagens (2) an einem Hebekipper (1) einer Nahrungsmittelteigverarbeitungsanlage, wobei der Hebekipper (1) einen Hubwagen (5) aufweist, der entlang einer Verfahrrichtung verfahrbar ist, wobei auf dem Hubwagen (5) eine Hebebühne (6) angeordnet ist, die an dem Hubwagen (5) schwenkbar gelagert ist, und wobei an der Hebebühne (6) eine Zangenverriegelungseinrichtung (7) mit einem verstellbaren Hebelsystem (17) zur Fixierung des Bottichwagens (2) gelagert ist, mittels dessen die Zangenverriegelungseinrichtung (7) zwischen der geschlossen und der geöffneten Stellung verstellbar ist, wobei das Hebelsystem (17) in die geschlossene Stellung vorgespannt ist, mit folgenden Verfahrensschritten:
a) Verfahren des Hubwagens (5) in eine unterste Position,
b) Einbringen des Bottichwagens (2) in die Zangenverriegelungseinrichtung (7), die sich in der geöffneten Stellung befindet,
c) Verfahren des Hubwagens (5) entlang der Verfahrrichtung, wodurch das Hebelsystem (17) relativ zum Hubwagen (5) bewegt wird und in die geschlossene Stellung übergeht und den Bottichwagen (2) an der Hebebühne (6) fixiert,
d) Verfahren des Hubwagens (5) bis in eine oberste Position und Verkippen des Bottichwagens (2) mittels der Hebebühne (6),
e) Zurückkippen des Bottichwagens (2) und Verfahren des Hubwagens (5) in Verfahrrichtung nach unten,
f) Bevor der Hubwagen (5) die unterste Position erreicht, Abstützen des Hebelsystems (17) an einem ortsfesten Bauteil des Hebekippers oder dem Boden, wodurch das Hebelsystem (17) entgegen der Vorspannung relativ zum Hubwagen (5) verstellt wird, wobei das Verstellen ein Öffnen der Zangenverriegelungseinrichtung (7) bewirkt, so dass der Bottichwagen (2) in der untersten Position des Hubwagens (5) aus der Zangenverriegelungseinrichtung (7) frei entnehmbar ist.

11. Verfahren nach Anspruch 10, **dadurch gekennzeichnet, dass** die Vorspannung mittels wenigstens einer Druckfeder (26) gebildet ist, die sich an dem Hebelsystem (17) und der Hebebühne (6) abstützt und das Hebelsystem (17) in einer unteren Stellung vorspannt, wobei in Schritt f) das Hebelsystem (17) durch die Abstützung von der unteren Stellung in eine obere Stellung angehoben wird.

## Claims

1. Lifting tipper (1) of a food dough processing plant with a lifting carriage (5) which can be moved along a direction of travel, wherein a lifting platform (6) is arranged on the lifting carriage (5), which is pivotably mounted on the lifting carriage (5), **characterized in that** a tongs locking device (7) for fixing a tub trolley (2) is mounted on the lifting platform (6), wherein the tongs locking device (7) has a tongs (15) with two arms (16) which are designed, in a closed position, to fix the tub trolley (2) in a predefined position and, in an open position, to release the tub trolley (2) for removal, wherein the tongs locking device (7) has an adjustable lever system (17), by means of which the tongs locking device (7) can be adjusted between the closed and the open position, wherein the lever system (17) is pretensioned into the closed position and by support on a stationary component of the lifting tipper or a floor can be brought into an open position against the pretension.

2. Lifting tipper according to claim 1, **characterized in that** the lever system (17) is axially symmetrical and comprises a central pivot joint (21) which lies on the axis of symmetry, wherein the lever system (17) is designed such that a vertical movement of the central pivot joint (21) caused by the support transfers the tongs locking device into an open position.

3. Lifting tipper according to claim 2, **characterized in that** a support rod (25) is attached to the central pivot joint (21), which, in a lowest position of the lifting carriage (5), is designed to stand on the ground and to move the central pivot joint (21) vertically upwards to an uppermost position.

4. Lifting tipper according to claim 3, **characterized in that** the support rod (25) has a length between 10 cm and 20 cm.

5. Lifting tipper according to one of the preceding claims, **characterized in that** the pretension is formed by means of at least one spring element (26) which is fastened on one side to the lever system (17) and on another side to the lifting platform (6).

6. Lifting tipper according to claim 5, **characterized in that** the at least one spring element (26) are two gas pressure springs, each of which is arranged on one side of the central pivot joint (21) on the lever system (17).

7. Lifting tipper according to claim 5 or 6, **characterized in that** the at least one spring element (26) has a total spring force between 5000 N and 7000 N.

8. Lifting tipper according to one of the preceding claims 2 to 7, **characterized in that** the lever system (17) has two connecting rods (18) which are rotatably mounted at their first ends on opposite sides of the central pivot joint (21) and are rotatably mounted at their second ends on one end of an arm (16), the pivot axes of the three pivot joints (19, 23) being oriented parallel to the ground.

9. Lifting tipper arrangement with a lifting tipper (1) according to one of the preceding claims and a tub trolley (2) having a tub (9) which is connected to a shaft and a base frame, wherein the shaft is concentrically surrounded by a hub disk (11) which is connected to the base frame and is thus held stationary relative to the tub trolley (2), and wherein the hub disk (11) can be gripped by the tongs of the tongs locking device (15) during the closing process.

10. Method for fixing a tub trolley (2) to a lifting tipper (1) of a food dough processing plant, wherein the lifting tipper (1) has a lifting carriage (5) which can be moved along a direction of travel, wherein a lifting platform (6) is arranged on the lifting carriage (5), which is pivotally mounted on the lifting carriage (5), and wherein a tongs locking device (7) with an adjustable lever system (17) for fixing the tub trolley (2) is mounted on the lifting platform (6), by means of which the tongs locking device (7) can be adjusted between the closed and the open position, wherein the lever system (17) is pretensioned into the closed position, with the following method steps:
a) moving the lifting carriage (5) to a lowest position,
b) inserting the tub trolley (2) into the tongs locking device (7) which is in the open position,
c) moving the lifting carriage (5) along the direction of travel, whereby the lever system (17) is moved relative to the lifting carriage (5) and moves into the closed position and fixes the tub trolley (2) to the lifting platform (6),
d) moving the lifting carriage (5) to a top position and tilting the tub trolley (2) by means of the lifting platform (6),
e) tilting the tub trolley (2) back and moving the lifting carriage (5) downwards in the direction of travel,
f) before the lifting carriage (5) reaches the lowest position, supporting the lever system (17) on a stationary component of the lifting tipper or the floor, whereby the lever system (17) is adjusted relative to the lifting carriage (5) against the pretension, wherein the adjustment causes an opening of the tongs locking device (7) so that the tub trolley (2) can be freely removed from the tongs locking device (7) in the lowest position of the lifting carriage (5).

11. Method according to claim 10, **characterized in that** the pretension is formed by means of at least one compression spring (26) which is supported on the lever system (17) and the lifting platform (6) and pretensions the lever system (17) in a lower position, wherein in step f) the lever system (17) is raised by the support from the lower position to an upper position.

## Revendications

1. Elévateur basculant (1) d'une installation de transformation de pâte alimentaire avec une cuve de pétrissage (5) qui peut être déplacé dans une direction de déplacement, une plate-forme élévatrice (6) étant disposée sur la cuve de pétrissage (5), qui est monté pivotant sur la cuve de pétrissage (5), **caractérisé en ce que** sur la plate-forme élévatrice (6) est monté un dispositif de verrouillage à pince (7) pour fixer un chariot de cuve (2), le dispositif de verrouillage à pince (7) étant une pince (15). avec deux bras (16) qui, dans une position fermée, sont conçus pour fixer le chariot à cuve (2) dans une position prédéfinie et dans une position ouverte pour libérer le chariot à cuve (2) pour le retrait, le dispositif de verrouillage à pince ( 7 ) comporte un système de levier réglable (17), grâce auquel le dispositif de verrouillage de la pince (7) peut être réglé entre la position fermée et la position ouverte, le système de levier (17) étant en position fermée est précontraint et peut être amené en position ouverte contre la précontrainte en l'appuyant sur un élément fixe de la élévateur basculant ou sur un plancher.

2. Elévateur basculant selon la revendication 1, **caractérisée en ce que** le système de levier (17) est à symétrie axiale et comprend une articulation centrale pivotante (21) qui s'étend sur l'axe de symétrie, le système de levier (17) étant conçu de telle sorte qu'un mouvement vertical de l'articulation pivotante médiane (21) transfère le dispositif de verrouillage de la pince dans une position ouverte.

3. Elévateur basculant selon la revendication 2, **caractérisée en ce qu'** une tige de support (25) est fixée au joint pivotant central (21) qui, dans une position la plus basse du cuve de pétrissage (5), est conçue pour reposer sur le sol et l'articulation centrale pivotante (21) se déplace verticalement jusqu'à une position haute.

4. Elévateur basculant selon la revendication 3, **caractérisée en ce que** la tige de support (25) a une longueur comprise entre 10 cm et 20 cm.

5. Elévateur basculant selon l'une des revendications précédentes, **caractérisée en ce que** la précharge est formée au moyen d'au moins un élément ressort (26) qui est fixé d'un côté au système de levier (17) et d'un côté à la plate-forme élévatrice (6). un autre côté.

6. Elévateur basculant selon la revendication 5, **caractérisée en ce que** le au moins un élément ressort (26) est constitué de deux ressorts à gaz, dont chacun est disposé sur un côté de l'articulation centrale (21) du système de levier (17).

7. Elévateur basculant selon la revendication 5 ou 6, **caractérisée en ce que** le au moins un élément ressort (26) présente une force de ressort totale comprise entre 5 000 N et 7 000 N.

8. Elévateur basculant selon l'une des revendications précédentes 2 à 7, **caractérisée en ce que** le système de levier (17) présente deux bielles (18) qui sont montées rotatives à leur première extrémité sur des côtés opposés de l'articulation centrale (21) et montées à rotation par leurs deuxièmes extrémités respectivement sur une extrémité d'un bras (16), les axes de pivotement des trois articulations pivotantes (19, 23) étant orientés parallèlement au sol.

9. Agencement de élévateur basculant comprenant une élévateur basculant (1) selon l'une des revendications précédentes et une chariot de cuve (2) comportant une cuve (9) qui est reliée à un arbre et à un châssis de base, l'arbre étant entouré de manière concentrique par un disque de moyeu (11) qui est relié au cadre de base et est ainsi maintenu immobile par rapport au chariot de cuve (2), et le disque de moyeu (11) est maintenu par la pince du dispositif de verrouillage à pince (15) peut être saisi pendant le processus de fermeture.

10. Procédé de fixation d'un chariot à cuve (2) sur une benne élévatrice (1) d'une installation de transformation de pâte alimentaire, la benne élévatrice (1) comportant une cuve de pétrissage (5) qui peut être déplacé dans une direction de déplacement, une plate-forme élévatrice (6) étant disposé sur la cuve de pétrissage (5), qui est monté pivotant sur la cuve de pétrissage (5), et sur lequel se trouve sur la plate-forme élévatrice (6) un dispositif de verrouillage à pince (7) avec un système de levier réglable (17) est monté pour fixer le chariot de cuve (2), au moyen duquel le dispositif de verrouillage à pince (7) peut être réglé entre la position fermée et la position ouverte, le système de levier (17) étant rappelé en position fermée, avec les étapes de processus suivantes :
a) déplacer la cuve de pétrissage (5) vers une position la plus basse,
b) introduire le chariot à cuve (2) dans le dispositif de verrouillage à pince (7), qui est en position ouverte,
c) déplacer la cuve de pétrissage (5) dans le sens de déplacement, le système de levier (17) se déplaçant par rapport au la cuve de pétrissage (5) et passant en position fermée et fixant le chariot à cuve (2) sur la plate-forme élévatrice (6),
d) éplacer la cuve de pétrissage (5) vers une position haute et incliner le chariot à cuve (2) à l'aide de la plate-forme élévatrice (6),
e) basculer le chariot à cuve (2) vers l'arrière et déplacer la cuve de pétrissage (5) vers le bas dans le sens de la marche,
f) avant que la cuve de pétrissage (5) n'atteigne la position la plus basse, appuyer le système de levier (17) sur un élément fixe de la benne élévatrice ou sur le sol, grâce à quoi le système de levier (17) est ajusté contre la précharge par rapport au cuve de pétrissage (5), le réglage d'une ouverture du dispositif de verrouillage des pinces (7) provoque le dégagement du chariot à cuve (2) du dispositif de verrouillage des pinces (7) dans la position la plus basse du cuve de pétrissage (5). est amovible.

11. Procédé selon la revendication 10, **caractérisé en ce que** la précontrainte est formée au moyen d'au moins un ressort de compression (26) qui s'appuie sur le système de levier (17) et sur la plate-forme élévatrice (6) et précontraint le système de levier (17). dans une position inférieure, dans laquelle à l'étape f), le système de levier (17) est élevé de la position inférieure à une position supérieure par le support.
